# EUROPÄISCHE PATENTSCHRIFT

(11) **EP 4 380 903 B1**
(45) Veröffentlichungstag und Bekanntmachung des Hinweises auf die Patenterteilung: **16.07.2025**
(21) Anmeldenummer: 22761472.4
(22) Anmeldetag: 03.08.2022
(51) Int. Cl.: C03B 33/02, B23K 26/067, B23K 26/53, B23K 26/06

(54) **VERFAHREN UND VORRICHTUNG ZUR LASERBEARBEITUNG EINES WERKSTÜCKS**
METHOD AND APPARATUS FOR LASER PROCESSING OF A WORKPIECE
PROCÉDÉ ET DISPOSITIF D'USINAGE AU LASER D'UNE PIÈCE

(30) Priorität: 04.08.2021 DE 102021120286
(43) Veröffentlichungstag der Anmeldung: 12.06.2024
(73) Patentinhaber: TRUMPF Laser- und Systemtechnik SE, 71254 Ditzingen (DE)
(72) Erfinder: FLAMM, Daniel, 71640 Ludwigsburg (DE); KAISER, Myriam, 71296 Heimsheim (DE); KLEINER, Jonas, 71229 Leonberg (DE)
(74) Vertreter: Trumpf Patentabteilung
(86) Internationale Anmeldenummer: PCT/EP2022/071799
(87) Internationale Veröffentlichungsnummer: WO 2023/012210

(56) Entgegenhaltungen:
- CN-A- 104 646 834
- JP-A- 2020 004 889

## Beschreibung

Die Erfindung betrifft ein Verfahren zur Laserbearbeitung eines Werkstücks, welches ein für die Laserbearbeitung transparentes Material aufweist, bei dem ein Eingangslaserstrahl mittels eines Strahlteilungselements in eine Mehrzahl von Teilstrahlen aufgeteilt wird, wobei die Aufteilung des Eingangslaserstrahls mittels des Strahlteilungselements durch Phasenaufprägung auf einen Strahlquerschnitt des Eingangslaserstrahls erfolgt, aus dem Strahlteilungselement ausgekoppelte Teilstrahlen mittels einer Fokussieroptik fokussiert werden, durch Fokussierung der Teilstrahlen mehrere Fokuselemente ausgebildet werden, und bei dem das Material des Werkstücks zur Laserbearbeitung mit zumindest einer Teilmenge der ausgebildeten Fokuselemente beaufschlagt wird.

Weiter betrifft die Erfindung eine Vorrichtung zur Laserbearbeitung eines Werkstücks, welches ein für die Laserbearbeitung transparentes Material aufweist, umfassend ein Strahlteilungselement zur Aufteilung eines in das Strahlteilungselement eingekoppelten Eingangslaserstrahls in eine Mehrzahl von Teilstrahlen, wobei die Aufteilung des Eingangslaserstrahls mittels des Strahlteilungselements durch Phasenaufprägung auf einen Strahlquerschnitt des Eingangslaserstrahls erfolgt, und eine Fokussieroptik zur Fokussierung von aus dem Strahlteilungselement ausgekoppelten Teilstrahlen, wobei durch Fokussierung der Teilstrahlen mehrere Fokuselemente zur Laserbearbeitung des Werkstücks ausgebildet werden.

Aus der DE 10 2014 116 958 A1 ist ein diffraktives optisches Strahlformungselement zur Aufprägung eines Phasenverlaufs auf einen zur Laserbearbeitung eines für den Laserstrahl weitgehend transparenten Materials vorgesehenen laserstrahl mit einer Phasenmaske bekannt, die zur Aufprägung einer Mehrzahl von strahlformenden Phasenverläufen auf den die Phasenmaske fallenden Laserstrahl ausgebildet ist, wobei mindestens einem der Mehrzahl von strahlformenden Phasenverläufe ein virtuelles optisches Bild zugeordnet ist, das in mindestens eine langgezogene Fokuszone zum Ausbilden einer Modifikation im zu bearbeitenden Material abbildbar ist.

Aus der JP 2020 004 889 A sind eine Vorrichtung und ein Verfahren zum Schneiden und insbesondere eines Substrats bekannt, wobei mittels eines Spatial Light Modulators eine Mehrzahl von Fokuspunkten erzeugt werden.

Der Erfindung liegt die Aufgabe zugrunde, ein eingangs genanntes Verfahren und eine eingangs genannte Vorrichtung bereitzustellen, mittels welchen eine Ausbildung von Materialmodifikationen im Material des Werkstücks besser kontrollierbar und/oder reproduzierbar ist, sodass insbesondere eine verbesserte Materialtrennung ermöglicht wird.

Diese Aufgabe wird bei dem eingangs genannten Verfahren erfindungsgemäß dadurch gelöst, dass die Phasenaufprägung mittels des Strahlteilungselements derart erfolgt, dass mindestens zwei der ausgebildeten Fokuselemente eine unterschiedliche Intensität aufweisen.

Es hat sich gezeigt, dass zur Ausbildung oberflächennaher Materialmodifikationen, d.h. nahe an einer Außenseite und/oder Oberseite des Werkstücks liegenden Materialmodifikationen, geringere Intensitäten notwendig sind als zur Ausbildung von Materialmodifikationen, welche tief im Volumen des Materials ausgebildet werden, d.h. weiter entfernt von der nächstliegenden Außenseite und/oder Oberseite des Werkstücks. Durch eine Ausbildung von mehreren Fokuselementen mit unterschiedlichen Intensitäten lassen sind im Material des Werkstücks Materialmodifikationen ausbilden, welche unabhängig von deren Tiefenpositionierung im Volumen des Materials gleichartige Eigenschaften aufweisen. Es lässt sich dadurch insbesondere eine Homogenität der Materialmodifikationen in Dickenrichtung und/oder Tiefenrichtung des Materials verbessern. Dadurch kann insbesondere eine Materialtrennung mit verbesserter Qualität und/oder Homogenität erreicht werden.

Insbesondere weisen mindestens zwei der ausgebildeten Fokuselemente, mit welchen das Material des Werkstücks zur Laserbearbeitung beaufschlagt wird, eine unterschiedliche Intensität auf.

Insbesondere sind die ausgebildeten Fokuselemente jeweils an unterschiedlichen räumlichen Positionen angeordnet.

Unter einer unterschiedlichen Intensität von Fokuselementen ist insbesondere zu verstehen, dass an unterschiedlichen räumlichen Positionen angeordnete Fokuselemente jeweils unterschiedliche Intensitäten aufweisen.

Insbesondere ist unter der Intensität eines bestimmten Fokuselements eine räumliche durchschnittliche Intensität oder eine maximale Intensität des Fokuselements zu verstehen.

Insbesondere erfolgt eine Definition der jeweiligen Intensität der Fokuselemente innerhalb eines bestimmten Mediums unter Vernachlässigung von Absorptionseffekten dieses Mediums. Beispielsweise erfolgt die Definition der Intensität in Luft und/oder in Glas.

Insbesondere sind die Intensitäten der ausgebildeten Fokuselemente während der Laserbearbeitung des Werkstücks zumindest näherungsweise zeitlich konstant.

Insbesondere sind voneinander verschiedene Fokuselemente zueinander beabstandet und/oder an unterschiedlichen räumlichen Positionen angeordnet. Es ist grundsätzlich möglich, dass sich voneinander verschiedene Fokuselemente abschnittsweise räumlich überlappen.

Unter der räumlichen Position eines bestimmten Fokuselements ist insbesondere eine Mittelpunktsposition des entsprechenden Fokuselements zu verstehen.

Günstig kann es sein, wenn die Intensität der Fokuselemente so gewählt wird, dass durch Beaufschlagung des Materials mit den Fokuselementen gleichartige Materialmodifikationen in dem Material erzeugt werden und insbesondere unabhängig von einem Abstand der jeweiligen Fokuselemente zu einer den jeweiligen Fokuselementen nächstliegenden Außenseite des Werkstücks gleichartige Materialmodifikationen in dem Material erzeugt werden. Es ergibt sich dadurch eine optimierte Trennbarkeit des Materials entlang der ausgebildeten Materialmodifikationen. Eine Trennung lässt sich dadurch beispielsweise mit erhöhter Homogenität und/oder mit glatterer Trennkante realisieren.

Unter gleichartigen Materialmodifikationen sind insbesondere Materialmodifikationen zu verstehen, welche zumindest näherungsweise eine gleiche selektive Ätzbarkeit und/oder eine gleiche räumliche Ausdehnung aufweisen.

Insbesondere weisen die gleichartigen Materialmodifikationen gleiche oder ähnliche Ätzeigenschaften auf. Es lässt sich dadurch insbesondere eine optimierte Trennung des Materials durch Ätzen mittels einer nasschemischen Lösung erreichen.

Vorteilhaft kann es sein, wenn die Intensität der Fokuselemente in Abhängigkeit eines Abstands und/oder Abstandsbereichs gewählt wird, mit welchem die jeweiligen Fokuselemente zu einer Außenseite des Werkstücks und insbesondere zu einer den jeweiligen Fokuselementen nächstliegenden Außenseite des Werkstücks beabstandet sind. Es lassen sich dadurch zumindest näherungsweise gleichartige Materialmodifikationen unabhängig von deren Abstand und/oder Abstandsbereich in dem Material ausbilden.

Unter einem Abstandsbereich sind insbesondere innerhalb eines bestimmten Intervalls liegende Abstände zu der Außenseite und insbesondere nächstliegenden Außenseite des Werkstücks zu verstehen.

Insbesondere ist ein bestimmtes Fokuselement jeweils eindeutig einem bestimmten Abstandsbereich zugeordnet. Insbesondere überlappen sich unterschiedliche Abstandsbereiche nicht.

Eine Abstandsrichtung des Abstands bzw. Abstandsbereichs ist insbesondere parallel zu einer Dickenrichtung des Werkstücks orientiert.

Das Werkstück ist beispielsweise plattenförmig und/oder tafelförmig ausgebildet.

Vorteilhaft kann es sein, wenn die Intensität der Fokuselemente mit zunehmendem Abstand der jeweiligen Fokuselemente zu der nächstliegenden Außenseite des Werkstücks zunehmend größer gewählt wird. Es lassen sich dadurch tiefer im Volumen des Werkstücks liegende Materialmodifikationen zumindest näherungsweise gleichartig ausbilden wie weniger tief liegende Materialmodifikationen.

Aus dem gleichen Grund kann es günstig sein, wenn eine durchschnittliche Intensität jeweiliger Fokuselemente, welche einem bestimmten Abstandsbereich zugeordnet sind, mit zunehmendem Mittelabstand des jeweiligen Abstandsbereichs zu der nächstliegenden Außenseite des Werkstücks zunehmend größer gewählt wird.

Insbesondere kann es vorgesehen sein, dass eine relative Intensität der ausgebildeten Fokuselemente um einen Faktor von mindestens 1,5 und/oder höchstens 5,0, bevorzugt von mindestens 2,0 und/oder höchstens 3,0 und besonders bevorzugt von 2,5, variiert.

Variiert die relative Intensität der ausgebildeten Fokuselemente beispielsweise um einen Faktor von 2,0, dann bedeutet dies, dass die ausgebildeten Fokuselemente mindestens ein Fokuselement mit einer kleinsten Intensität und mindestens ein Fokuselement mit einer größten Intensität umfassen, wobei die Intensität des Fokuselements mit der größten Intensität um einen Faktor 2,0 größer ist als die Intensität des Fokuselements mit der kleinsten Intensität.

Insbesondere kann es vorgesehen sein, dass mindestens ein Abstandsbereich vorgesehen ist, wobei die Intensität jeweiliger Fokuselemente, welche innerhalb dieses mindestens einen Abstandsbereichs liegen, zumindest näherungsweise konstant ist. Beispielsweise sind dann mehrere Abstandsbereiche vorgesehen, deren zugeordnete Fokuselemente jeweils unterschiedliche Intensitäten aufweisen. Beispielsweise variiert die Intensität der Fokuselemente dann stufenförmig.

Insbesondere kann es vorgesehen sein, dass mindestens ein Abstandsbereich vorgesehen ist, wobei die Intensität jeweiliger Fokuselemente, welche innerhalb dieses mindestens einen Abstandsbereichs liegen, variierend ist, und wobei insbesondere die Intensität der in diesem Abstandsbereich liegenden Fokuselemente mit zunehmendem Abstand dieser Fokuselemente zu der nächstliegenden Außenseite des Werkstücks zunimmt. Insbesondere sind dann die jeweiligen Intensitäten von zwei oder mehr oder allen der in diesem Abstandsbereich liegenden Fokuselemente unterschiedlich. Beispielsweise ist dann jeweils die Intensität zueinander benachbarter Fokuselemente unterschiedlich.

Beispielsweise sind ein erster Abstandsbereich vorgesehen, in welchem die Intensität jeweiliger Fokuselemente, welche innerhalb dieses ersten Abstandsbereichs liegen, variierend ist, und ein weiterer Abstandsbereich, in welchem die Intensität jeweiliger Fokuselemente, welche innerhalb dieses weiteren Abstandsbereichs liegen, zumindest näherungsweise konstant ist. Der erste Abstandsbereich grenzt dann beispielsweise an eine Außenseite des Werkstücks an oder schließt eine Außenseite des Werkstücks ein. Der weitere Abstandsbereich liegt dann beispielsweise vollständig innerhalb des Materials des Werkstücks und grenzt insbesondere an den ersten Abstandsbereich an.

Beispielsweise ist dann eine Intensität der Fokuselemente des weiteren Abstandsbereichs um einen Faktor von mindestens 1,5 bis 5,0, bevorzugt von 2,0 bis 3,0, besonders bevorzugt von 2,5, größer als die Intensität der Fokuselemente des ersten Abstandsbereichs.

Vorteilhaft kann es sein, wenn voneinander verschiedene Fokuselemente entlang einer vorgegebenen Bearbeitungslinie angeordnet werden, und insbesondere wenn die voneinander verschiedenen Fokuselemente entlang der Bearbeitungslinie so beabstandet sind und/oder eine solche Intensität aufweisen, dass durch Beaufschlagung des Materials des Werkstücks mit diesen Fokuselementen Materialmodifikationen in dem Material ausgebildet werden, welche eine Trennung des Materials entlang dieser Bearbeitungslinie ermöglichen. Bei der Laserbearbeitung des Materials ergibt sich dadurch eine Ausbildung von Materialmodifikationen entlang dieser Bearbeitungslinie bzw. entlang einer mit dieser Bearbeitungslinie korrespondierenden Bearbeitungsfläche. Insbesondere ist das Material entlang dieser Bearbeitungslinie bzw. Bearbeitungsfläche trennbar.

Beispielsweise weist die mindestens eine Bearbeitungslinie eine Gesamtlänge zwischen 50 µm und 5000 µm auf.

Insbesondere kann es vorgesehen sein, dass das Material des Werkstücks durch Ausübung einer thermischen Beaufschlagung und/oder einer mechanischen Spannung und/oder durch Ätzen mittels mindestens einer nasschemischen Lösung trennbar ist oder getrennt wird. Beispielsweise erfolgt das Ätzen in einem ultraschallunterstützten Ätzbad.

Insbesondere kann es vorgesehen sein, dass die Bearbeitungslinie über eine Dicke des Materials des Werkstücks räumlich durchgängig ausgebildet ist.

Die Bearbeitungslinie ist nicht notwendigerweise räumlich zusammenhängend ausgebildet, sondern kann verschiedene räumlich getrennte Abschnitte aufweisen. Insbesondere kann die Bearbeitungslinie Lücken und/oder Unterbrechungen aufweisen, in denen keine Fokuselemente angeordnet sind.

Insbesondere ist oder umfasst die Bearbeitungslinie eine Verbindungslinie zwischen einander benachbarten Fokuselementen.

Insbesondere kann es vorgesehen sein, dass ein Anstellwinkel zwischen der Bearbeitungslinie und einer Außenseite des Werkstücks, durch welche die Fokuselemente zur Laserbearbeitung in das Material des Werkstücks eingekoppelt werden, mindestens 1° und/oder höchstens 90° beträgt. Es lässt sich dadurch beispielsweise ein senkrechter Schnitt an dem Werkstück ausführen oder es lässt sich das Werkstück unter einem bestimmten Winkel anfasen.

Insbesondere kann es vorgesehen sein, der Anstellwinkel der Bearbeitungslinie zumindest abschnittsweise konstant ist, und/oder dass die Bearbeitungslinie mehrere Abschnitte mit unterschiedlichen Anstellwinkeln aufweist.

Insbesondere kann es vorgesehen sein, dass die Bearbeitungslinie zumindest abschnittsweise eine Gerade ist, und/oder dass die Bearbeitungslinie zumindest abschnittsweise eine Kurve ist.

Durch Ausführung der Bearbeitungslinie als Kurve lassen sich beispielsweise abgerundete Segmente von dem Werkstück abtrennen. Dadurch lassen sich beispielsweise abgerundete Kanten erzeugen.

Bei Ausführung der Bearbeitungslinie als Kurve ist der Bearbeitungslinie beispielsweise ein bestimmter Anstellwinkelbereich zugeordnet, welchen die Bearbeitungslinie bezüglich der Außenseite des Werkstücks aufweist.

Günstig kann es sein, wenn ein oder mehrere der ausgebildeten Fokuselemente während der Laserbearbeitung des Werkstücks zumindest abschnittsweise und/oder zumindest zeitweise außerhalb eines Materials des Werkstücks angeordnet werden oder angeordnet sind. Insbesondere lässt sich dadurch erreichen, dass das Material des Werkstücks während der Laserbearbeitung im Fall von Dickenschwankungen und/oder im Fall von Fokuslagenschwankungen weiterhin im Bereich der Außenseite mit Fokuselementen beaufschlagt wird.

Insbesondere ragt die Bearbeitungslinie während der Laserbearbeitung in Dickenrichtung des Werkstücks über mindestens eine Außenseite des Werkstücks hinaus und/oder zumindest zeitweise über eine Außenseite des Werkstücks hinaus.

Beispielsweise sind außerhalb des Materials des Werkstücks angeordnete Fokuselemente mit einem Abstand zu einer diesen Fokuselementen nächstliegenden Außenseite des Werkstücks beabstandet.

Beispielsweise ist ein außerhalb des Materials angeordneter Abschnitt der Bearbeitungslinie eine tangentiale Fortsetzung der Bearbeitungslinie an einen innerhalb des Materials angeordneten Endpunkt und/oder Endabschnitt der Bearbeitungslinie.

Insbesondere kann es vorgesehen sein, dass zur Laserbearbeitung des Werkstücks die Fokuselemente relativ zu dem Material des Werkstücks mit einer Vorschubgeschwindigkeit bewegt werden.

Insbesondere wird die Bearbeitungslinie mit den Fokuselementen zur Laserbearbeitung des Werkstücks relativ zu dem Werkstück mit einer in Vorschubrichtung orientierten Vorschubgeschwindigkeit bewegt. Es wird dadurch insbesondere eine mit der Bearbeitungslinie korrespondierende Bearbeitungsfläche ausgebildet, entlang welcher Materialmodifikationen angeordnet sind.

Vorzugsweise liegen die Fokuselemente jeweils zumindest abschnittsweise in einer Ebene, welche insbesondere senkrecht zur Vorschubrichtung orientiert ist. Insbesondere liegen alle ausgebildeten Fokuselemente in dieser Ebene.

Günstig kann es sein, wenn mittels einem Polarisations-Strahlteilungselement eine Polarisationsstrahlteilung durchgeführt wird, sodass die Teilstrahlen einen von mindestens zwei unterschiedlichen Polarisationszuständen aufweisen, wobei durch Fokussierung der Teilstrahlen mittels der Fokussieroptik Fokuselemente mit unterschiedlichen Polarisationszuständen ausgebildet werden, und wobei insbesondere Fokuselemente mit unterschiedlichen Polarisationszuständen zueinander benachbart angeordnet werden. Es wird dadurch insbesondere eine Interferenz zueinander benachbarter Fokuselemente verhindert. Dadurch lassen sich zueinander benachbarte Fokuselemente mit einem besonders geringen Abstand zueinander anordnen.

Die durch ultrakurze Laserpulse in transparente Materialien eingebrachten Materialmodifikationen werden in drei verschiedene Klassen unterteilt, siehe K. Itoh et al. "Ultrafast Processes for Bulk Modification of Transparent Materials" MRS Bulletin, vol. 31 p.620 (2006): Typ I ist eine isotrope Brechungsindexänderung; Typ II ist eine doppelbrechende Brechungsindexänderung; und Typ III ist ein sogenannter Void beziehungsweise Hohlraum. Die erzeugte Materialmodifikation hängt hierbei von Laserparametern des Laserstrahls, aus welchem die Fokuszone gebildet ist, wie z.B. der Pulsdauer, der Wellenlänge, der Pulsenergie und der Repetitionsfrequenz des Laserstrahls, und von den Materialeigenschaften, wie unter Anderem der elektronischen Struktur und dem thermischen Ausdehnungskoeffizient, sowie von der numerischen Apertur (NA) der Fokussierung, ab.

Die isotropen Brechungsindexänderungen des Typs I werden auf ein örtlich begrenztes Aufschmelzen durch die Laserpulse und eine schnelle Wiedererstarrung des transparenten Materials zurückgeführt. Beispielsweise ist bei Quarzglas die Dichte und der Brechungsindex des Materials höher, wenn das Quarzglas von einer höheren Temperatur schnell herunter gekühlt wird. Wenn also das Material im Fokusvolumen schmilzt und dann schnell abkühlt, weist das Quarzglas in den Bereichen der Materialmodifikation einen höheren Brechungsindex auf, als in den nicht modifizierten Bereichen.

Die doppelbrechenden Brechungsindexänderungen des Typs II können beispielsweise durch Interferenzen zwischen dem ultrakurzen Laserpuls und dem elektrischen Feld des durch die Laserpulse erzeugten Plasmas entstehen. Diese Interferenz führt zu periodischen Modulationen in der Elektronenplasmadichte, welche beim Erstarren zu einer doppelbrechenden Eigenschaft, also richtungsabhängigen Brechungsindizes, des transparenten Materials führt. Eine Typ II Modifikation geht beispielsweise auch mit der Bildung von sogenannten Nanogratings einher.

Die Voids (Hohlräume) der Typ III-Modifikationen können beispielsweise mit einer hohen Laserpulsenergie erzeugt werden. Hierbei wird die Bildung der Voids einer explosionsartigen Ausdehnung von hoch angeregtem, verdampftem Material aus dem Fokusvolumen in das umgebende Material zugeschrieben. Dieser Prozess wird auch als Mikroexplosion bezeichnet. Da diese Ausdehnung innerhalb der Masse des Materials stattfindet, hinterlässt die Mikroexplosion einen weniger dichten oder hohlen Kern (der Void), beziehungsweise eine mikroskopische Fehlstelle im Submikrometer-Bereich oder im atomaren Bereich, der oder die von einer verdichteten Materialhülle umgeben ist. Durch die Verdichtung an der Stoßfront der Mikroexplosion entstehen in dem transparenten Material Spannungen, die zu einer spontanen Rissbildung führen können, beziehungsweise eine Rissbildung begünstigen können.

Insbesondere kann die Bildung von Voids auch mit Typ I und Typ II Modifikationen einhergehen. Beispielsweise können Typ I und Typ II Modifikationen in den weniger beanspruchten Gebieten um die eingebrachten Laserpulse herum entstehen. Wenn demnach vom Einbringen einer Typ III Modifikation die Rede ist, dann ist in jedem Fall ein weniger dichter oder hohler Kern beziehungsweise eine Fehlstelle vorhanden. Beispielsweise wird in Saphir bei einer Typ III Modifikation durch die Mikroexplosion kein Hohlraum erzeugt, sondern ein Bereich geringerer Dichte. Aufgrund der auftretenden Materialspannungen bei einer Typ III Modifikation geht eine solche Modifikation zudem oft mit einer Rissbildung einher oder begünstig diese zumindest. Die Bildung von Typ I und Typ II Modifikationen kann beim Einbringen von Typ III Modifikationen nicht vollständig unterbunden oder vermieden werden. Das Auffinden von "reinen" Typ III Modifikationen ist daher nicht wahrscheinlich.

Bei hohen Repetitionsraten des Laserstrahls kann das Material zwischen den Pulsen nicht vollständig abkühlen, sodass kumulative Effekte der eingebrachten Wärme von Puls zu Puls einen Einfluss auf die Materialmodifikation nehmen können. Beispielsweise kann die Repetitionsfrequenz des Laserstrahls höher sein als der Kehrwert der Wärmediffusionszeit des Materials, sodass in an den Fokuselementen durch sukzessive Absorption von Laserenergie eine Wärmeakkumulation stattfinden kann, bis die Schmelztemperatur des Materials erreicht ist. Durch den thermischen Transport der Wärmeenergie in die die Fokuselemente umliegenden Gebiete kann zudem ein größerer Bereich als die Fokuselemente aufgeschmolzen werden. Nach dem Einbringen von ultrakurzen Laserpulsen, kühlt das erwärmte Material schnell ab, so dass die Dichte und andere strukturelle Eigenschaften des Hochtemperaturzustands im Material gewissermaßen eingefroren werden.

Insbesondere kann es vorgesehen sein, dass durch Beaufschlagung des Materials des Werkstücks mit den Fokuselementen in dem Material Materialmodifikationen ausgebildet werden, welche mit einer Rissbildung des Materials assoziiert sind, und/oder dass durch Beaufschlagung eines Materials des Werkstücks mit den Fokuselementen in dem Material Typ-III-Materialmodifikationen ausgebildet werden.

Darunter, dass die Ausbildung von Materialmodifikationen mit einer Rissbildung assoziiert ist, ist insbesondere zu verstehen, dass die Ausbildung der Materialmodifikationen mit einer Rissbildung im Material einhergeht und/oder dass bei Ausbildung der Materialmodifikationen eine Rissbildung im Material erfolgt.

Insbesondere kann es vorgesehen sein, dass durch Beaufschlagung des Materials des Werkstücks mit den Fokuselementen in dem Material Materialmodifikationen ausgebildet werden, welche mit einer Änderung eines Brechungsindex des Materials assoziiert sind, und/oder dass durch Beaufschlagung eines Materials des Werkstücks mit den Fokuselementen in dem Material Typ-I-Materialmodifikationen und/oder Typ-II-Materialmodifikationen ausgebildet werden.

Darunter, dass die Ausbildung von Materialmodifikationen mit einer Änderung des Brechungsindex assoziiert ist, ist insbesondere zu verstehen, dass die Ausbildung der Materialmodifikationen mit einer Änderung des Brechungsindex im Material einhergeht und/oder dass bei Ausbildung der Materialmodifikationen Änderung des Brechungsindex im Material erfolgt.

Bei der eingangs genannten Vorrichtung zur Laserbearbeitung eines Werkstücks ist es erfindungsgemäß vorgesehen, dass mittels des Strahlteilungselements die Phasenaufprägung derart erfolgt, dass mindestens zwei der ausgebildeten Fokuselemente eine unterschiedliche Intensität aufweisen.

Die erfindungsgemäße Vorrichtung weist insbesondere ein oder mehrere Merkmale und/oder Vorteile des erfindungsgemäßen Verfahrens auf. Vorteilhafte Ausführungsformen der erfindungsgemäßen Vorrichtung wurden bereits im Zusammenhang mit dem erfindungsgemäßen Verfahren erläutert.

Insbesondere umfasst die Vorrichtung mindestens ein Polarisations-Strahlteilungselement, welches bezüglich einer Strahlausbreitungsrichtung des Eingangslaserstrahls vor oder nach dem Strahlteilungselement angeordnet ist, wobei mittels des Polarisations-Strahlteilungselements eine Polarisationsstrahlteilung durchgeführt wird, dass die auf die Fokussieroptik einfallenden Teilstrahlen jeweils einen von mindestens zwei unterschiedlichen Polarisationszuständen aufweisen und dass durch Fokussierung der Teilstrahlen mittels der Fokussieroptik Fokuselemente mit unterschiedlichen Polarisationszuständen ausgebildet werden.

Insbesondere ist das erfindungsgemäße Verfahren mittels der erfindungsgemäßen Vorrichtung ausführbar oder das erfindungsgemäße Verfahren wird mittels der erfindungsgemäßen Vorrichtung ausgeführt.

Insbesondere sind die Fokuselemente aus dem Eingangslaserstrahl gebildet, wobei die Fokuselemente insbesondere durch Umformung und/oder Strahlformung des Eingangslaserstrahls gebildet sind.

Insbesondere kann es vorgesehen sein, dass die Aufteilung des Eingangslaserstrahls mittels des Strahlteilungselements durch Phasenmanipulation einer Phase des Eingangslaserstrahls erfolgt. Insbesondere erfolgt die Aufteilung des Eingangslaserstrahls ausschließlich durch Phasenmanipulation der Phase des Eingangslaserstrahls.

Die Fokussieroptik ist nicht notwendigerweise als separates optisches Element ausgebildet. Es ist grundsätzlich auch möglich, dass die Fokussieroptik in eine andere Komponente der Vorrichtung integriert ist, beispielsweise in das Strahlteilungselement und/oder in ein Polarisations-Strahlteilungselement.

Insbesondere ist eine mittels des Strahlteilungselements durchgeführte Phasenaufprägung auf den Strahlquerschnitt des ersten Eingangsstrahls variabel einstellbar und/oder definierbar.

Das Strahlteilungselement ist insbesondere als diffraktives Strahlteilungselement ausgebildet und/oder als 3D-Strahlteilungselement ausgebildet.

Insbesondere umfasst die erfindungsgemäße Vorrichtung eine Laserquelle zur Bereitstellung des Eingangslaserstrahls, welcher insbesondere ein gepulster Laserstrahl und/oder ein Ultrakurzpulslaserstrahl ist.

Insbesondere ist das Material des Werkstücks aus einem für den Eingangslaserstrahl und/oder aus einem für einen Laserstrahl, aus welchem die Fokuselemente gebildet sind, transparenten Material hergestellt.

Unter einem transparenten Material ist insbesondere ein Material zu verstehen, durch welches mindestens 70 % und insbesondere mindestens 80 % und insbesondere mindestens 90 % einer Laserenergie eines Laserstrahls, aus welchem die Fokuselemente gebildet sind, transmittiert wird.

Insbesondere sind die Fokuselemente aus einem Ultrakurspulslaserstrahl ausgebildet oder mittels eines Ultrakurspulslaserstrahls bereitgestellt. Dieser Ultrakurzpulslaserstrahl umfasst insbesondere ultrakurze Laserpulse.

Beispielsweise beträgt eine Wellenlänge des Eingangslaserstrahls und/oder des Laserstrahls, aus welchem die Fokuselemente ausgebildet sind, mindestens 300 nm und/oder höchstens 1500 nm. Beispielsweise beträgt die Wellenlänge 515 nm oder 1030 nm.

Insbesondere weist der Eingangslaserstrahl und/oder der Laserstrahl, aus welchem die Fokuselemente ausgebildet sind, eine mittlere Leistung von mindestens 1W bis 1kW auf. Beispielsweise umfasst der Laserstrahl Pulse mit einer Pulsenergie von mindestens 10 µJ und/oder höchstens 50 mJ. Es kann vorgesehen sein, dass der Laserstrahl Einzelpulse oder Bursts umfasst, wobei die Bursts 2 bis 20 Subpulse und insbesondere einen zeitlichen Abstand von näherungsweise 20ns aufweisen.

Insbesondere ist unter einem Fokuselement ein Strahlungsbereich mit einer bestimmten räumlichen Ausdehnung zu verstehen. Zur Bestimmung von räumlichen Dimensionen eines bestimmten Fokuselements, wie z.B. eines Durchmessers des Fokuselements, werden nur Intensitätswerte betrachtet, welche oberhalb einer bestimmten Intensitätsschwelle liegen. Die Intensitätsschwelle wird hierbei beispielsweise so gewählt, dass unterhalb dieser Intensitätsschwelle liegende Werte eine derart geringe Intensität aufweisen, sodass diese für eine Wechselwirkung mit dem Material zur Ausbildung von Materialmodifikationen nicht mehr relevant sind. Beispielsweise beträgt die Intensitätsschwelle 50% eines globalen Intensitätsmaximums des Fokuselements.

Insbesondere ist unter den Angaben "zumindest näherungsweise" oder "näherungsweise" im Allgemeinen eine Abweichung von höchstens 10 % zu verstehen. Falls nicht anders angegeben, ist unter den Angaben "zumindest näherungsweise" oder "näherungsweise" insbesondere zu verstehen, dass ein tatsächlicher Wert und/oder Abstand und/oder Winkel um höchstens 10 % von einem idealen Wert und/oder Abstand und/oder Winkel abweicht.

Die nachfolgende Beschreibung bevorzugter Ausführungsformen dient im Zusammenhang mit den Zeichnungen der näheren Erläuterung der Erfindung. Es zeigen:
- Fig. 1: eine schematische Darstellung eines Ausführungsbeispiels einer Vorrichtung zur Laserbearbeitung eines Werkstücks;
- Fig. 2: eine schematische Querschnittsdarstellung eines Abschnitts eines Werkstücks, welches zur Laserbearbeitung mit mehreren Fokuselementen beaufschlagt wird;
- Fig. 3: eine schematische Querschnittsdarstellung eines Abschnitts eines mit mehreren Fokuselementen beaufschlagten Werkstücks, wobei mehrere Fokuselemente vorhanden sind, welche außerhalb des Werkstücks positioniert sind;
- Fig. 4: eine schematische Querschnittsdarstellung eines Abschnitts eines Werkstücks, in welchem durch Beaufschlagung des Werkstücks mit Fokuselementen Materialmodifikationen erzeugt wurden, welche mit einer Rissbildung des Materials einhergehen;
- Fig. 5a: eine Querschnittsdarstellung einer simulierten Intensitätsverteilung von Fokuselementen zur Laserbearbeitung des Werkstücks;
- Fig. 5b: eine der Intensitätsverteilung gemäß Fig. 5a zugeordnete Phasenverteilung;
- Fig. 6a: eine schematische perspektivische Darstellung eines Werkstücks mit daran ausgebildeten Materialmodifikationen, welche sich entlang einer Bearbeitungslinie und/oder Bearbeitungsfläche erstecken; und
- Fig. 6b: eine schematische Darstellung von zwei Werkstücksegmenten, welche durch Trennung des Werkstücks gemäß Fig. 6a entlang der Bearbeitungslinie und/oder Bearbeitungsfläche gebildet sind.

Gleiche oder funktional äquivalente Elemente sind in allen Figuren mit denselben Bezugszeichen versehen.

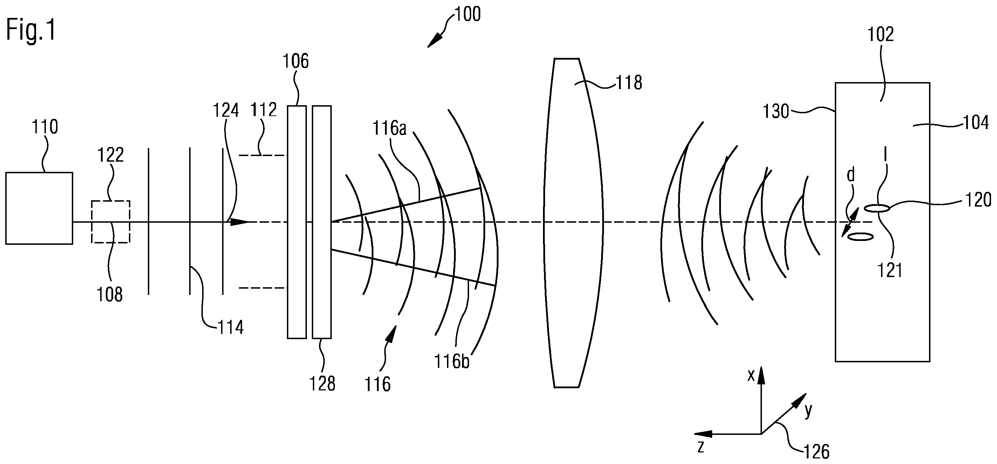

Ein Ausführungsbeispiel einer Vorrichtung zur Laserbearbeitung eines Werkstücks ist in Fig. 1 gezeigt und dort mit 100 bezeichnet. Mittels der Vorrichtung 100 lassen sich in einem Material 102 des Werkstücks 104 lokalisierte Materialmodifikationen, wie beispielsweise Fehlstellen im Submikrometerbereich oder atomaren Bereich, erzeugen, welche eine Materialschwächung zur Folge haben. An diesen Materialmodifikationen lässt sich das Werkstück 104 trennen oder es lässt sich beispielsweise ein Werkstücksegment von dem Werkstück 104 abtrennen.

Insbesondere können mittels der Vorrichtung 100 Materialmodifikationen unter einem Anstellwinkel in das Material 102 eingebracht werden, sodass sich durch Abtrennung eines entsprechenden Werkstücksegments von dem Werkstück 104 ein Kantenbereich des Werkstücks 104 anfasen oder abschrägen lässt.

Die Vorrichtung 100 umfasst ein Strahlteilungselement 106, in welches ein Eingangslaserstrahl 108 eingekoppelt wird. Dieser Eingangslaserstrahls 108 wird beispielsweise mittels einer Laserquelle 110 bereitgestellt. Beispielsweise ist der Eingangslaserstrahl 108 ein gepulster Laserstrahl und/oder ein Ultrakurzpulslaserstrahl.

Unter dem Eingangslaserstrahl 108 ist insbesondere ein Strahlenbündel zu verstehen, welches eine Mehrzahl insbesondere parallel verlaufender Strahlen umfasst. Der Eingangslaserstrahl 108 weist insbesondere einen transversalen Strahlquerschnitt 112 und/oder eine transversale Strahlausdehnung auf, mit welchem bzw. welcher der Eingangslaserstrahl 108 auf das Strahlteilungselement 106 trifft.

Der auf das Strahlteilungselement 106 treffende Eingangslaserstrahl 108 weist insbesondere zumindest näherungsweise ebene Wellenfronten 114 auf.

Mittels des Strahlteilungselements 106 wird der Eingangslaserstrahl 108 in eine Mehrzahl von Teilstrahlen 116 und/oder Teilstrahlenbündeln aufgeteilt. Bei dem in Fig. 1 gezeigten Beispiel sind zwei voneinander verschiedene Teilstrahlen 116a und 116b angedeutet.

Die aus dem Strahlteilungselement 106 ausgekoppelten Teilstrahlen 116 weisen insbesondere ein divergentes Strahlprofil auf.

Zur Fokussierung der aus dem Strahlteilungselement 106 ausgekoppelten Teilstrahlen 116 umfasst die Vorrichtung 100 eine Fokussieroptik 118, in welche die Teilstrahlen 116 eingekoppelt werden. Die Fokussieroptik 116 ist beispielsweise als Mikroskopobjektiv und/oder Linsenelement ausgebildet.

Insbesondere treffen voneinander verschiedene Teilstrahlen 116 mit einem Ortsversatz und/oder Winkelversatz auf die Fokussieroptik 118 auf.

Die Teilstrahlen 116 werden mittels der Fokussieroptik 118 fokussiert, sodass mehrere Fokuselemente 120 ausgebildet werden, welche jeweils an unterschiedlichen räumlichen Positionen angeordnet sind. Es ist grundsätzlich möglich, dass sich zueinander benachbarte Fokuselemente 120 abschnittsweise räumlich überlappen.

Beispielsweise sind einem jeweiligen Fokuselement 120 jeweils ein oder mehrere Teilstrahlen 116 und/oder Teilstrahlenbündel zugeordnet. Beispielsweise wird ein jeweiliges Fokuselement 120 durch Fokussierung ein oder mehrerer Teilstrahlen 116 und/oder Teilstrahlenbündel ausgebildet.

Zur Laserbearbeitung des Werkstücks 104 werden die Fokuselemente 120 in das Material 102 des Werkstücks 104 eingebracht und relativ zu dem Material 102 bewegt.

Dem in das Strahlteilungselement 106 eingekoppelten Eingangslaserstrahl 108 ist eine bestimmte Fokusverteilung zugeordnet. Diese Fokusverteilung beschreibt eine geometrische Form und/oder ein Intensitätsprofil eines Fokuselements, welches durch Fokussierung des Eingangslaserstrahls 108 vor Einkopplung in das Strahlteilungselement 106 ausgebildet werden würde. Insbesondere ist unter der geometrischen Form eine räumliche Form und/oder räumliche Ausdehnung des ausgebildeten Fokuselements zu verstehen.

Beispielsweise weist der Eingangslaserstrahl 108, wenn dieser z.B. mittels der Laserquelle 110 bereitgestellt wird, ein gaußförmiges Strahlprofil auf. Durch Fokussierung des Eingangslaserstrahls 108 würde in diesem Fall ein Fokuselement ausgebildet werden, welches eine Fokusverteilung mit gaußförmiger Form und/oder gaußförmigem Intensitätsprofil aufweist.

Alternativ hierzu kann es beispielsweise vorgesehen sein, dass dem Eingangslaserstrahl 108 ein Bessel-artiges Strahlprofil zugeordnet ist, sodass durch Fokussierung des Eingangslaserstrahls 108 ein Fokuselement ausgebildet werden würde, welches eine Fokusverteilung mit Bessel-artiger Form und/oder Bessel-artigem Intensitätsprofil aufweist.

Den durch Aufteilung des Eingangslaserstrahls 108 mittels des Strahlteilungselements 106 ausgebildeten Teilstrahlen 116 und/oder Teilstrahlenbündeln ist die Fokusverteilung des Eingangslaserstrahls 108 derart zugeordnet, dass durch Fokussierung der Teilstrahlen 116 die Fokuselemente 120 mit dieser Fokusverteilung und/oder mit einer auf dieser Fokusverteilung basierenden Fokusverteilung ausgebildet werden.

Bei dem in Fig. 1 gezeigten Beispiel weist der Eingangslaserstrahl 108 ein gaußförmiges Strahlprofil auf, d. h. dem Eingangslaserstrahl 108 ist eine Fokusverteilung mit gaußförmiger Form und/oder gaußförmigem Intensitätsprofil zugeordnet. Die Fokuselemente 120 weisen dann beispielsweise jeweils eine Fokusverteilung 121 mit dieser gaußförmigen Form und/oder diesem gaußförmigem Intensitätsprofil oder mit einer auf dieser gaußförmigen Form und/oder diesem gaußförmigem Intensitätsprofil basierenden Form und/oder basierendem Intensitätsprofil auf.

Die Fokusverteilung 121 ist eine Eigenschaft der jeweiligen Fokuselemente 120 und beschreibt deren Form und/oder Intensitätsprofil.

Falls dem Eingangslaserstrahl 108 beispielsweise ein Bessel-artiges Strahlprofil zugeordnet ist, weisen die zur Laserbearbeitung des Werkstücks 104 ausgebildeten Fokuselemente 120 jeweils eine Fokusverteilung 121 mit diesem Bessel-artigen Strahlprofil oder mit einem auf diesem Bessel-artigen Profil basierenden Strahlprofil auf. Die Fokuselemente 120 lassen sich dadurch beispielsweise jeweils mit einer Fokusverteilung ausbilden, welche eine längliche Form und/oder ein längliches Intensitätsprofil aufweist.

Es kann vorgesehen sein, dass die Vorrichtung 100 eine Strahlformungseinrichtung 122 zur Strahlformung des Eingangslaserstrahls 108 aufweist (angedeutet in Fig. 1). Beispielsweise ist diese Strahlformungseinrichtung 122 bezüglich einer Strahlausbreitungsrichtung 124 des Eingangslaserstrahls 108 vor dem Strahlteilungselement 106 angeordnet und/oder zwischen der Laserquelle 110 und dem Strahlteilungselement 106 angeordnet.

Mittels der Strahlformungseinrichtung 122 lässt sich dem Eingangslaserstrahl 108 insbesondere eine bestimmte Fokusverteilung und/oder ein bestimmtes Strahlprofil zuordnen.

Die Strahlformungseinrichtung 122 kann beispielsweise eingerichtet sein, um aus einem Laserstrahl mit gaußförmigem Strahlprofil einen Laserstrahl mit quasinichtbeugendem und/oder Bessel-artigem Strahlprofil auszubilden. Der in das Strahlteilungselement 106 eingekoppelte Eingangslaserstrahl 108 weist dann entsprechend das quasi-nichtbeugende und/oder Bessel-artige Strahlprofil auf.

Hinsichtlich der Ausbildung und Eigenschaften von quasi-nichtbeugenden und/oder Bessel-artigen Strahlen mit gekrümmter Form wird auf die wissenschaftliche Veröffentlichung "Bessel-like optical beams with arbitrary trajectories" von I. Chremmos et al., Optics Letters, Vol. 37, No. 23, 1. Dezember 2012, verwiesen.

Durch Strahlteilung mittels des Strahlteilungselements 106 werden insbesondere die Fokuselemente 120 jeweils als Kopien ausgebildet. Insbesondere weisen ein oder mehrere der ausgebildeten Fokuselemente 120 eine gleiche geometrische Form und/oder ein gleiches Intensitätsprofil auf.

Insbesondere lässt sich mittels des Strahlteilungselements 106 ein jeweiliger Abstand d und/oder ein Ortsversatz zwischen einander benachbarten Fokuselementen 120 einstellen. Eine Abstandsrichtung des mittels des Strahlteilungselements 106 einstellbaren Abstands d liegt vorzugsweise in einer Ebene, welche quer und insbesondere senkrecht zu einer Vorschubrichtung 126 orientiert ist, mit welcher die Fokuselemente 120 zur Laserbearbeitung des Werkstücks 104 relativ zu dem Werkstück 104 bewegt werden. Beispielsweise ist der Abstand d mittels des Strahlteilungselements 106 komponentenweise in zwei Raumrichtungen einstellbar, welche die genannte Ebene aufspannen oder in der genannten Ebene liegen (bei dem in Fig. 1 gezeigten Beispiel x-Richtung und z-Richtung).

Die Vorschubrichtung 126 ist bei dem in Fig. 1 gezeigten Beispiel parallel zur y-Richtung orientiert, welche senkrecht zur x-Richtung und zur z-Richtung liegt.

Insbesondere werden zur Einstellung des Abstands d die Teilstrahlen 116 derart ausgebildet, dass diese mit einem bestimmten Ortsversatz und/oder mit einer bestimmten Konvergenz und/oder Divergenz auf die Fokussieroptik 118 treffen. Die Teilstrahlen 116 werden dann mittels der Fokussieroptik 118 fokussiert, sodass die Fokuselemente 120 mit dem entsprechenden Abstand d und/oder Ortsversatz ausgebildet werden.

Weiter lässt sich den ausgebildeten Fokuselementen 120 mittels des Strahlteilungselements 106 jeweils eine bestimmte Intensität I zuordnen. Insbesondere wird die jeweilige Intensität I eines bestimmten Fokuselements 120 mittels des Strahlteilungselements 106 eingestellt und insbesondere durch Phasenaufprägung auf den Eingangslaserstrahl 108 eingestellt. Durch Fokussierung der aus dem Strahlteilungselement 106 ausgekoppelten Teilstrahlen 116 werden dann die Fokuselemente 120 mit einer definierten Intensität I ausgebildet.

Insbesondere ist unter der Intensität I eines bestimmten Fokuselements 120 eine absolute Intensität und/oder eine durchschnittliche Intensität des entsprechenden Fokuselements 120 zu verstehen.

Es ist vorgesehen, dass die Strahlteilung mittels des Strahlteilungselements 106 derart erfolgt, dass zwei oder mehr der ausgebildeten Fokuselemente 120 jeweils eine unterschiedliche Intensität I aufweisen.

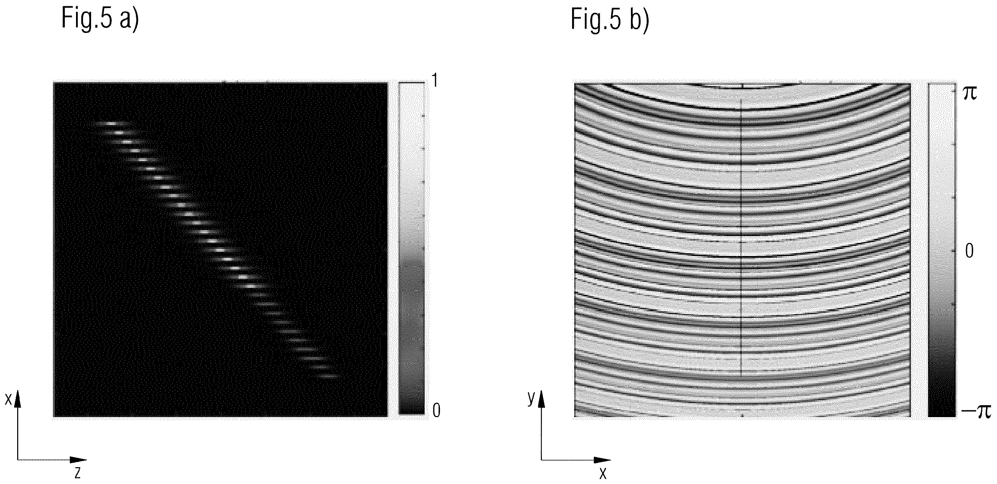

Zur Durchführung der Strahlteilung mittels des Strahlteilungselements 106 wird auf den transversalen Strahlquerschnitt 112 des Eingangslaserstrahls 108 eine definierte transversale Phasenverteilung aufgeprägt. Unter einem transversalen Strahlquerschnitt bzw. einer transversalen Phasenverteilung ist insbesondere ein Strahlquerschnitt bzw. eine Phasenverteilung in einer zur Strahlausbreitungsrichtung 124 quer und insbesondere senkrecht orientierten Ebene zu verstehen. Ein Beispiel für eine transversale Phasenverteilung von aus dem Strahlteilungselement 106 ausgekoppelten Strahlen ist in Fig. 5b gezeigt.

Die Fokuselemente 120 werden durch Interferenz der fokussierten Teilstrahlen 116 ausgebildet, wobei beispielsweise konstruktive Interferenz, destruktive Interferenz oder Zwischenfälle hiervon auftreten können, wie z.B. teilweise konstruktive oder destruktive Interferenz.

Zur Ausbildung der Fokuselemente 120 mit dem jeweiligen Abstand d und/oder Ortsversatz erfolgt die Phasenaufprägung mittels des Strahlteilungselements 106 insbesondere derart, dass die zugeordnete Phasenverteilung für jedes Fokuselement 120 einen bestimmten optischen Gitteranteil und/oder optischen Linsenanteil aufweist.

Aufgrund des optischen Gitteranteils ergibt sich nach Fokussierung der Teilstrahlen 116 ein entsprechender Ortsversatz der ausgebildeten Fokuselemente 120 in einer ersten Raumrichtung, z.B. in der x-Richtung. Aufgrund des optischen Linsenanteils treffen Teilstrahlen 116 bzw. Teilstrahlenbündel mit unterschiedlichen Winkeln bzw. unterschiedlicher Konvergenz oder Divergenz auf die Fokussieroptik 118, was nach erfolgter Fokussierung in einem Ortsversatz in einer zweiten Raumrichtung, z.B. in der z-Richtung, resultiert.

Die Intensität der jeweiligen Fokuselemente 120 ist bestimmt durch Phasenlagen der fokussierten Teilstrahlen 116 zueinander. Diese Phasenlagen sind durch die genannten optischen Gitteranteile und optischen Linsenanteile definierbar. Die Phasenlagen der fokussierten Teilstrahlen 116 können bei der Auslegung des Strahlteilungselements 106 so zueinander gewählt werden, dass die Fokuselemente 120 jeweils eine gewünschte Intensität aufweisen.

Hinsichtlich der technischen Realisierung und Eigenschaften des Strahlteilungselements 106 wird auf die wissenschaftliche Veröffentlichung "Structured light for ultrafast laser micro- and nanoprocessing" von D. Flamm et al., arXiv:2012.10119v1 [physics.optics], 18. Dezember 2020, verwiesen. Hierauf wird ausdrücklich und vollinhaltlich Bezug genommen.

Beispielsweise ist das Strahlteilungselement 106 als 3D-Strahlteilungselement ausgebildet.

Es kann vorgesehen sein, dass die Vorrichtung 100 ein Polarisations-Strahlteilungselement 128 aufweist. Mittels des Polarisations-Strahlteilungselements 128 wird eine Polarisationsstrahlteilung des Eingangslaserstrahls 108 und/oder eines aus dem Strahlteilungselement 106 ausgekoppelten Teilstrahls in Strahlen durchgeführt, welche jeweils einen von mindestens zwei unterschiedlichen Polarisationszuständen aufweisen.

Bezüglich der Strahlausbreitungsrichtung 124 des Eingangslaserstrahls 108 kann das Polarisations-Strahlteilungselement 128 beispielsweise vor oder nach dem Strahlteilungselement 106 angeordnet sein.

Insbesondere sind unter den genannten Polarisationszuständen lineare Polarisationszustände zu verstehen, wobei beispielsweise zwei unterschiedliche Polarisationszustände vorgesehen und/oder zueinander senkrecht orientierte Polarisationszustände vorgesehen sind.

Insbesondere sind aus dem Polarisations-Strahlteilungselement 128 ausgekoppelte Strahlen derart polarisiert, dass ein elektrisches Feld in einer Ebene senkrecht zur Propagationsrichtung der Strahlen orientiert ist (transversal elektrisch).

Zur Polarisationsstrahlteilung weist das Polarisations-Strahlteilungselement 128 beispielsweise ein doppelbrechendes Linsenelement und/oder ein doppelbrechendes Keilelement auf. Das doppelbrechende Linsenelement und/oder das doppelbrechende Keilelement sind beispielsweise aus einem Quarzkristall hergestellt oder umfassen einen Quarzkristall.

Hinsichtlich der Funktionsweise und Ausführung des Polarisations-Strahlteilungselements 128 wird auf die deutschen Patentanmeldungen mit Aktenzeichen 10 2020 207 715.0 (Anmeldetag: 22. Juni 2020) und mit Aktenzeichen 10 2019 217 577.5 (Anmeldetag: 14. November 2019) der gleichen Anmelderin verwiesen. Hierauf wird ausdrücklich und vollinhaltlich Bezug genommen.

Durch Polarisationsstrahlteilung mittels des Polarisations-Strahlteilungselements 128 weisen die auf die Fokussieroptik 118 treffenden Teilstrahlen 116 beispielsweise jeweils einen von mindestens zwei unterschiedlichen Polarisationszuständen auf. Durch Fokussierung dieser Teilstrahlen 116 mittels der Fokussieroptik 118 lassen sich dadurch die Fokuselemente 120 jeweils aus Strahlen mit einem bestimmten Polarisationszustand ausbilden. Den Fokuselementen 120 lässt sich dadurch jeweils ein bestimmter Polarisationszustand zuordnen.

Insbesondere kann es vorgesehen sein, dass einander benachbarte Fokuselemente 120 jeweils einen unterschiedlichen Polarisationszustand aufweisen.

Insbesondere sind das Strahlteilungselement 106 und/oder das Polarisations-Strahlteilungselement 128 jeweils als Fernfeldstrahlformungselemente ausgebildet.

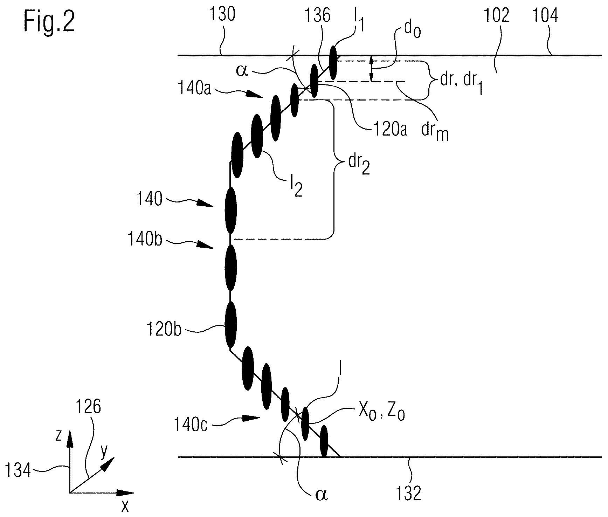

Zur Laserbearbeitung des Werkstücks 104 wird zumindest eine Teilmenge und/oder Auswahl der ausgebildeten Fokuselemente 120 in das Material 102 eingebracht (Fig. 2).

Jedem der ausgebildeten Fokuselemente 120 ist eine bestimmte örtliche Position x₀, z₀ zugeordnet, an welcher ein jeweiliges Fokuselement 120 bezüglich dem Material 102 des Werkstücks 104 angeordnet ist. Weiter ist jedem der Fokuselemente 120 eine bestimmte Intensität I zugeordnet.

Insbesondere liegen die örtlichen Positionen der jeweiligen Fokuselemente 120 in einer zur Vorschubrichtung 126 senkrecht orientierten Ebene. Insbesondere liegen alle ausgebildeten Fokuselemente 120 zumindest abschnittsweise in dieser zur Vorschubrichtung 126 senkrecht orientierten Ebene.

Mittels des Strahlteilungselements 106 lässt sich sowohl die örtliche Position x₀, z₀ als auch die Intensität I der jeweiligen Fokuselemente 120 definieren. Hierzu wird die mittels des Strahlteilungselements 106 auf den Strahlquerschnitt 112 des Eingangslaserstrahls 108 aufgeprägte Phasenverteilung entsprechend angepasst.

Die Einkopplung der Fokuselemente 120, welche zur Laserbearbeitung des Werkstücks 104 in das Material 102 eingebracht werden, erfolgt beispielsweise durch eine erste Außenseite 130 des Werkstücks 104 hindurch.

Beispielsweise ist das Werkstück 104 plattenförmig und/oder tafelförmig ausgebildet. Eine zweite Außenseite 132 des Werkstücks 104 ist beispielsweise in Dickenrichtung 134 und/oder Tiefenrichtung des Werkstücks 104 zu der ersten Außenseite 130 beabstandet angeordnet.

Die Vorschubrichtung 126 ist quer und insbesondere senkrecht zu der Dickenrichtung 134 des Werkstücks 104 orientiert.

Insbesondere werden die ausgebildeten Fokuselemente 120 entlang einer definierten Bearbeitungslinie 136 angeordnet. Diese Bearbeitungslinie 136 korrespondiert mit einer gewünschten Bearbeitungsgeometrie, mit welcher die Laserbearbeitung des Werkstücks 104 durchgeführt werden soll.

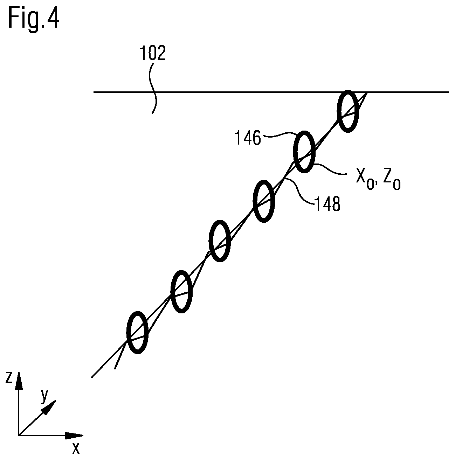

Die jeweiligen Abstände d und Intensitäten I der entlang der Bearbeitungslinie 136 angeordneten Fokuselemente 130 sind so gewählt, dass durch Beaufschlagung des Materials 102 mit diesen Fokuselementen 120 Materialmodifikationen 138 ausgebildet werden (Fig. 4), welche eine Trennung des Materials entlang dieser Bearbeitungslinie 136 und/oder einer mit dieser Bearbeitungslinie 136 korrespondierenden Bearbeitungsfläche ermöglichen.

Insbesondere kann es vorgesehen sein, dass sich die Bearbeitungslinie 136 zwischen der ersten Außenseite 130 und der zweiten Außenseite 132 und insbesondere durchgängig zwischen der ersten Außenseite und der zweiten Außenseite 132 des Werkstücks 104 erstreckt.

Es kann vorgesehen sein, dass die Bearbeitungslinie 136 mehrere unterschiedliche Abschnitte 140 aufweist. Beispielsweise weist die Bearbeitungslinie 136 bei dem in Fig. 2 gezeigten Beispiel einen ersten Abschnitt 140a, einen zweiten Abschnitt 140b und einen dritten Abschnitt 140c auf, wobei sich bezüglich der Dickenrichtung 134 der zweite Abschnitt 140b an den ersten Abschnitt 140a anschließt und der dritte Abschnitt 140c an den zweiten Abschnitt 140b anschließt.

Allerdings ist die Bearbeitungslinie 136 nicht notwendigerweise stetig und/oder differenzierbar ausgebildet. Es kann vorgesehen sein, dass die Bearbeitungslinie 136 Unterbrechungen und/oder Lücken aufweist, an welchen insbesondere keine Fokuselemente 120 angeordnet sind.

Die Bearbeitungslinie 136 und/oder unterschiedliche Abschnitte 140 der Bearbeitungslinie 136 können beispielsweise als Gerade oder Kurve ausgebildet sein.

Weiter ist der Bearbeitungslinie 136 und/oder den jeweiligen Abschnitten 140 der Bearbeitungslinie 136 ein bestimmter Anstellwinkel α und/oder Anstellwinkelbereich zugeordnet, welchen die Bearbeitungslinie 136 bzw. der jeweilige Abschnitt 140 mit der ersten Außenseite 130 des Werkstücks 104 einschließt.

Bei dem gezeigten Ausführungsbeispiel beträgt der Anstellwinkel α des ersten Abschnitts 140a und des dritten Abschnitts 140c betragsmäßig 45° und derjenige des zweiten Abschnitts 90°.

Die einem bestimmten Abschnitt 140 zugeordneten Fokuselemente 120 können jeweils unterschiedliche Intensitäten I aufweisen.

Es ist vorgesehen, dass die jeweilige Intensität I eines bestimmten Fokuselements 120 in Abhängigkeit eines Abstands d₀ und/oder Abstandsbereichs dr gewählt wird, mit welchem das entsprechende Fokuselement 120 zu einer dem entsprechenden Fokuselement 120 nächstliegenden Außenseite 130, 132 des Werkstücks 104 beabstandet ist. Eine Abstandsrichtung des Abstands d₀ und/oder des Abstandsbereichs dr ist insbesondere parallel zur Dickenrichtung 134 des Werkstücks 104 orientiert.

Unter der zu einem Fokuselement 120 nächstliegenden Außenseite ist diejenige Außenseite 130, 132 des Werkstücks zu verstehen, welche zu dem entsprechenden Fokuselement 120 den kürzesten Abstand und insbesondere den kürzesten Abstand bezüglich der Dickenrichtung 134 aufweist. Bei dem in Fig. 2 gezeigten Beispiel ist die dem Fokuselement 120a nächstliegende Außenseite die erste Außenseite 130 und die dem Fokuselement 120b nächstliegende Außenseite die zweite Außenseite 132.

Jedem Abstandsbereich dr ist ein Mittelabstand drₘ zugeordnet, wobei unter dem Mittelabstand drₘ ein mittlerer Abstand und/oder ein durchschnittlicher Abstand des entsprechenden Abstandsbereichs dr zu der nächstliegenden Außenseite 130, 132 des Werkstücks 104 zu verstehen ist.

Bei dem Beispiel gemäß Fig. 2 sind ein erster Abstandsbereich dr₁ und ein zweiter Abstandsbereich dr₂ vorgesehen, wobei die in dem ersten Abstandsbereich dr₁ liegenden Fokuselemente 120 eine erste Intensität I₁ und die in dem zweiten Abstandsbereich dr₂ liegenden Fokuselemente 120 eine von der ersten Intensität I₁ verschiedene zweite Intensität I₂ aufweisen. Die Intensität I₂ ist hierbei größer als die Intensität I₁ (angedeutet in Fig. 2).

Beispielsweise sind der erste Abstandsbereich dr₁ und der zweite Abstandsbereich dr₂ aufeinanderfolgende und/oder nicht überlappende Abstandsbereiche. Unterschiedliche Fokuselemente 120 sind dadurch eindeutig einem bestimmten Abstandsbereich dr zugeordnet.

Bei dem in Fig. 2 gezeigten Beispiel sind die jeweiligen Intensitäten I₁, I₂ der in dem ersten Abstandsbereich dr₁ und der in dem zweiten Abstandsbereich dr₂ liegenden Fokuselemente 120 zumindest näherungsweise konstant. Es ist allerdings grundsätzlich auch möglich, dass mindestens ein Abstandsbereich dr vorgesehen ist, in welchem zwei oder mehr der darin liegenden Fokuselemente 120 voneinander verschiedene Intensitäten I aufweisen.

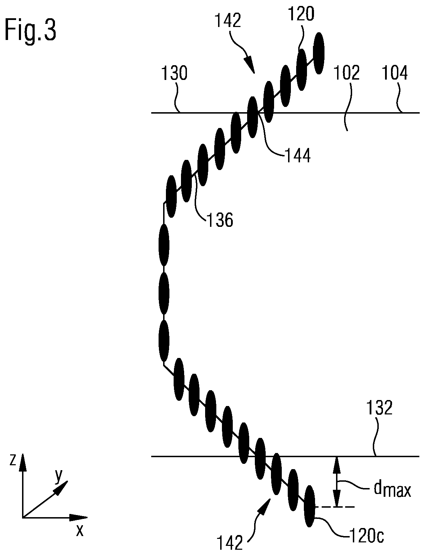

Es kann vorgesehen sein, dass Fokuselemente 120 ausgebildet werden, welche während der Laserbearbeitung des Werkstücks 104 zu einem bestimmten Zeitpunkt und/oder an einer bestimmten Position zumindest abschnittsweise außerhalb des Werkstücks 104 angeordnet sind (Fig. 3). In diesem Fall weist die Bearbeitungslinie 136, entlang welcher die Fokuselemente 120 angeordnet sind, mindestens einen Abschnitt 142 auf, in welchem die Bearbeitungslinie 136 über die erste Außenseite 130 und/oder die zweite Außenseite 132 des Werkstücks 104 hinausragt.

Bei dem Beispiel gemäß Fig. 3 weist die Bearbeitungslinie zwei Abschnitte 142 auf.

Der Abschnitt 142 ist beispielsweise eine tangentiale Fortsetzung der Bearbeitungslinie 136 an einen innerhalb des Materials 102 angeordneten Endpunkt 144 und/oder Endabschnitt der Bearbeitungslinie 136.

Insbesondere ragt der außerhalb des Materials 102 angeordnete Abschnitt 142 der Bearbeitungslinie 136 bis zu einem maximalen Abstand dₘₐₓ über die dem Abschnitt 142 nächstliegende Außenseite 130 bzw. 132 des Werkstücks 104 hinaus, wobei eine Abstandsrichtung des maximalen Abstands dₘₐₓ in Dickenrichtung 134 orientiert ist.

Insbesondere ist der maximale Abstand dₘₐₓ ein Abstand eines außerhalb des Materials 102 angeordneten Fokuselements 120c, welches zu der nächstliegenden Außenseite 130, 132 den größten Abstand aufweist.

Der maximale Abstand dₘₐₓ ist insbesondere so gewählt, dass Schwankungen einer Dicke des Materials 102 und/oder Achsentoleranzen ausgeglichen werden können.

Falls die Dicke des Materials 102 beispielsweise in Vorschubrichtung 126 in einem bestimmten Bereich zunimmt, wird das Material 102 in diesem Bereich mit Fokuselementen 120 beaufschlagt, welche in einem anderen Bereich außerhalb des Materials 102 angeordnet waren.

Durch Beaufschlagung und/oder Einbringung der Fokuselemente 120 in das Material 102 werden jeweils lokalisierte Materialmodifikationen 146 ausgebildet, welche an den jeweiligen örtlichen Positionen x₀, z₀ der entsprechenden Fokuselemente 120 in dem Material 102 angeordnet sind (Fig. 4).

Durch geeignete Wahl von Bearbeitungsparametern, wie beispielsweise den jeweiligen Abständen d zwischen den Fokuselementen 120, ihren jeweiligen Intensitäten I, einer in Vorschubrichtung 126 orientierten Vorschubgeschwindigkeit und den Laserparametern des Eingangslaserstrahls 108, können die Materialmodifikationen 146 beispielsweise als Typ-III-Modifikationen ausgebildet werden, welche mit einer spontanen Bildung von Rissen 148 im Material 102 des Werkstücks 104 einhergehen. Insbesondere werden Risse 148 zwischen einander benachbarten Materialmodifikationen 146 ausgebildet.

Alternativ hierzu ist es auch möglich, durch geeignete Wahl der Bearbeitungsparameter die Materialmodifikationen 146 als Typ-I- und/oder Typ-II-Modifikationen auszubilden, welche mit einer Wärmeakkumulation im Material 102 und/oder mit einer Änderung eines Brechungsindex des Materials 102 einhergehen.

Die Ausbildung der Materialmodifikationen 146 als Typ-I- und/oder Typ-II-Modifikationen ist mit einer Wärmeakkumulation im Material 102 des Werkstücks 104 assoziiert. Insbesondere wird zur Ausbildung dieser Materialmodifikationen 146 der jeweilige Abstand d zwischen den Fokuselementen 120 so gering gewählt, dass es bei Beaufschlagung des Materials 102 mit den Fokuselementen zu dieser Wärmeakkumulation kommt.

Fig. 5a zeigt eine simulierte Intensitätsverteilung einer Mehrzahl von Fokuselementen 120, wobei die bezüglich der z-Richtung unten angeordneten Fokuselemente eine geringere Intensität I aufweisen als die oben angeordneten Fokuselemente 120. In der gezeigten Graustufendarstellung stehen hellere Bereiche für höhere Intensitäten.

Fig. 5b zeigt eine der Intensitätsverteilung gemäß Fig. 5a zugeordnete Phasenverteilung von aus dem Strahlteilungselement 106 ausgekoppelten Strahlen, wobei die Graustufenskala von Weiß (Phase +Pi) bis Schwarz (Phase - Pi) reicht.

Die Laserbearbeitung des Werkstücks 104 mittels der Vorrichtung 100 funktioniert wie folgt:
Zur Durchführung der Laserbearbeitung wird das Material 102 des Werkstücks 104 mit den Fokuselementen 120 beaufschlagt und die Fokuselemente 120 werden in Vorschubrichtung 126 relativ zu dem Werkstück 104 durch dessen Material 102 bewegt.

Das Material 102 ist hierbei ein für eine Wellenlänge von Strahlen, aus welchen die Fokuselemente 120 jeweils gebildet sind, transparentes Material. Beispielsweise ist das Material 102 ein Glasmaterial.

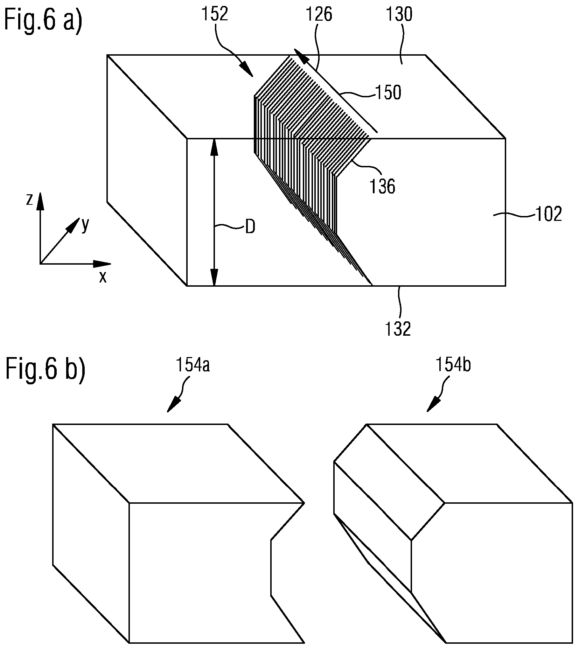

Durch Beaufschlagung des Materials 102 mit den Fokuselementen 120 werden in dem Material 102 Materialmodifikationen 146 ausgebildet, welche entlang der Bearbeitungslinie 136 angeordnet sind. Bei dem in Fig. 6 gezeigten Beispiel werden Materialmodifikationen 146 durchgängig über eine in Dickenrichtung 134 orientierte Dicke D des Materials 102 ausgebildet.

Durch Relativbewegung der Fokuselemente 120 zu dem Material 102 entlang einer vorgegebenen Trajektorie 150 wird eine mit der Bearbeitungslinie 136 korrespondierende Bearbeitungsfläche 152 ausgebildet, an welcher die Materialmodifikationen 146 angeordnet sind. Es ergibt sich dadurch eine flächige Ausbildung und/oder Anordnung der Materialmodifikationen 146 entlang der Bearbeitungsfläche 152.

Ein Abstand von in Vorschubrichtung 126 benachbarten Materialmodifikationen 138 lässt sich beispielsweise durch Einstellung einer Pulsdauer des Eingangslaserstrahls 108 und/oder durch Einstellung der Vorschubgeschwindigkeit definieren.

Die entlang der Bearbeitungsfläche 152 ausgebildeten Materialmodifikationen 146 haben insbesondere eine Verringerung einer Festigkeit des Materials 102 zur Folge. Es lässt sich dadurch das Material 102 nach Ausbildung der Materialmodifikationen 146 an der Bearbeitungsfläche 152, beispielsweise durch Ausübung einer mechanischen Kraft, in zwei voneinander verschiedene Werkstücksegmente 154a und 154b trennen (Fig. 6b).

Das Werkstücksegment 154b ist bei dem gezeigten Beispiel ein Gutstücksegment mit einer gewünschten Kantenform, welche mit der Form der Bearbeitungslinie 136 korrespondiert. Das Werkstücksegment 188b ist in diesem Fall ein Restwerkstücksegment und/oder ein Verschnittsegment.

Das Material 102 des Werkstücks 104 ist beispielsweise Quarzglas. Beispielsweise weist dann zur Ausbildung der Materialmodifikationen 146 als Typ I und/oder Typ II Modifikationen ein Laserstrahl, aus welchem die Fokuselemente 120 gebildet sind, eine Wellenlänge von 1030 nm und eine Pulsdauer von 1 ps auf. Weiter beträgt dann eine der Fokussieroptik 118 zugeordnete numerische Apertur 0,4 und eine einem einzigen Fokuselement 120 zugeordnete Pulsenergie 50 bis 200 nJ.

Zur Ausbildung der Materialmodifikationen 146 als Typ III Modifikationen beträgt, bei ansonsten gleichen Parametern, die einem einzigen Fokuselement 120 zugeordnete Pulsenergie 500 bis 2000 nJ.

### Bezugszeichenliste

- α: Anstellwinkel
- d: Abstand
- d₀: Abstand
- dₘₐₓ: maximaler Abstand
- dr: Abstandsbereich
- dr₁: Abstandsbereich
- dr₂: Abstandsbereich
- drₘ: Mittelabstand
- D: Dicke
- I: Intensität
- I₁: Intensität
- I₂: Intensität
- L: Überstandslänge
- x₀: Position in x-Richtung
- z₀: Position in y-Richtung
- 100: Vorrichtung
- 102: Material
- 104: Werkstück
- 106: Strahlteilungselement
- 108: Eingangslaserstrahl
- 110: Laserquelle
- 112: Strahlquerschnitt
- 114: Wellenfront
- 116: Teilstrahlen
- 116a: Teilstrahl
- 116b: Teilstrahl
- 118: Fokussieroptik
- 120: Fokuselemente
- 120a: Fokuselement
- 120b: Fokuselement
- 120c: Fokuselement
- 121: Fokusverteilung
- 122: Strahlformungseinrichtung
- 124: Strahlausbreitungsrichtung
- 126: Vorschubrichtung
- 128: Polarisations-Strahlteilungselement
- 130: erste Außenseite
- 132: zweite Außenseite
- 134: Dickenrichtung
- 136: Bearbeitungslinie
- 138: Materialmodifikation
- 140: Abschnitt
- 140a: erster Abschnitt
- 140b: zweiter Abschnitt
- 140c: dritter Abschnitt
- 142: Abschnitt
- 144: Endpunkt / Endabschnitt
- 146: Materialmodifikation
- 148: Riss
- 150: Trajektorie
- 152: Bearbeitungsfläche
- 154a: Werkstücksegment
- 154b: Werkstücksegment

## Patentansprüche

1. Verfahren zur Laserbearbeitung eines Werkstücks (104), welches ein für die Laserbearbeitung transparentes Material (102) aufweist, bei dem ein Eingangslaserstrahl (108) mittels eines Strahlteilungselements (106) in eine Mehrzahl von Teilstrahlen (116) aufgeteilt wird, wobei die Aufteilung des Eingangslaserstrahls (108) mittels des Strahlteilungselements (106) durch Phasenaufprägung auf einen Strahlquerschnitt (112) des Eingangslaserstrahls (108) erfolgt, aus dem Strahlteilungselement (106) ausgekoppelte Teilstrahlen (116) mittels einer Fokussieroptik (118) fokussiert werden, durch Fokussierung der Teilstrahlen (116) mehrere Fokuselemente (120) ausgebildet werden, und bei dem das Material (102) des Werkstücks (104) zur Laserbearbeitung mit zumindest einer Teilmenge der ausgebildeten Fokuselemente (120) beaufschlagt wird, **dadurch gekennzeichnet, dass** die Phasenaufprägung mittels des Strahlteilungselements (106) derart erfolgt, dass mindestens zwei der ausgebildeten Fokuselemente (120) eine unterschiedliche Intensität (I) aufweisen.

2. Verfahren nach Anspruch 1, **dadurch gekennzeichnet, dass** die Intensität (I) der Fokuselemente (120) so gewählt wird, dass durch Beaufschlagung des Materials (102) mit den Fokuselementen (120) gleichartige Materialmodifikationen (138) in dem Material (102) erzeugt werden und insbesondere unabhängig von einem Abstand (d₀) der jeweiligen Fokuselemente (120) zu einer den jeweiligen Fokuselementen (120) nächstliegenden Außenseite (130, 132) des Werkstücks (104) gleichartige Materialmodifikationen (138) in dem Material (102) erzeugt werden.

3. Verfahren nach einem der vorangehenden Ansprüche, **dadurch gekennzeichnet, dass** die Intensität (I) der Fokuselemente (120) in Abhängigkeit eines Abstands (d₀) und/oder Abstandsbereichs (dr) gewählt wird, mit welchem die jeweiligen Fokuselemente (130) zu einer Außenseite (130, 132) des Werkstücks (104) und insbesondere zu einer den jeweiligen Fokuselementen (120) nächstliegenden Außenseite (130, 132) des Werkstücks (104) beabstandet sind.

4. Verfahren nach Anspruch 3, **dadurch gekennzeichnet, dass** die Intensität (I) der Fokuselemente (120) mit zunehmendem Abstand (d₀) der jeweiligen Fokuselemente (120) zu der nächstliegenden Außenseite (130, 132) des Werkstücks (104) zunehmend größer gewählt wird.

5. Verfahren nach einem der Ansprüche 3 oder 4, **dadurch gekennzeichnet, dass** eine durchschnittliche Intensität (I) jeweiliger Fokuselemente (120), welche einem bestimmten Abstandsbereich (dr) zugeordnet sind, mit zunehmendem Mittelabstand (drₘ) des jeweiligen Abstandsbereichs (dr) zu der nächstliegenden Außenseite (130, 132) des Werkstücks zunehmend größer gewählt wird.

6. Verfahren nach einem der Ansprüche 3 bis 5, **dadurch gekennzeichnet, dass** mindestens ein Abstandsbereich (dr) vorgesehen ist, wobei die Intensität (I) jeweiliger Fokuselemente, welche innerhalb dieses mindestens einen Abstandsbereichs (dr) liegen, zumindest näherungsweise konstant ist.

7. Verfahren nach einem der Ansprüche 3 bis 6, **dadurch gekennzeichnet, dass** mindestens ein Abstandsbereich (dr) vorgesehen ist, wobei die Intensität (I) jeweiliger Fokuselemente (120), welche innerhalb dieses mindestens einen Abstandsbereichs (dr) liegen, variierend ist, und wobei insbesondere die Intensität (I) der in diesem Abstandsbereich (dr) liegenden Fokuselemente (120) mit zunehmendem Abstand (d) dieser Fokuselemente (120) zu der nächstliegenden Außenseite (130, 132) des Werkstücks (104) zunimmt.

8. Verfahren nach einem der vorangehenden Ansprüche, **dadurch gekennzeichnet, dass** voneinander verschiedene Fokuselemente (120) entlang einer vorgegebenen Bearbeitungslinie (136) angeordnet werden, und insbesondere **dadurch gekennzeichnet, dass** die voneinander verschiedenen Fokuselemente (120) entlang der Bearbeitungslinie (136) so beabstandet sind und/oder eine solche Intensität (I) aufweisen, dass durch Beaufschlagung des Materials (102) des Werkstücks (104) mit diesen Fokuselementen (120) Materialmodifikationen(138) in dem Material (102) ausgebildet werden, welche eine Trennung des Materials (102) entlang dieser Bearbeitungslinie (136) ermöglichen.

9. Verfahren nach Anspruch 8, **dadurch gekennzeichnet, dass** ein Anstellwinkel (α) zwischen der Bearbeitungslinie (136) und einer Außenseite (130, 132) des Werkstücks (104), durch welche die Fokuselemente (120) zur Laserbearbeitung in das Material (102) des Werkstücks (104) eingekoppelt werden, mindestens 1° und/oder höchstens 90° beträgt.

10. Verfahren nach einem der vorangehenden Ansprüche, **dadurch gekennzeichnet, dass** ein oder mehrere der ausgebildeten Fokuselemente (120) während der Laserbearbeitung des Werkstücks (104) zumindest abschnittsweise und/oder zumindest zeitweise außerhalb eines Materials (102) des Werkstücks (104) angeordnet werden oder angeordnet sind.

11. Verfahren nach einem der vorangehenden Ansprüche, **dadurch gekennzeichnet, dass** mittels einem Polarisations-Strahlteilungselement (128) eine Polarisationsstrahlteilung durchgeführt wird, sodass die Teilstrahlen (116) einen von mindestens zwei unterschiedlichen Polarisationszuständen aufweisen, wobei durch Fokussierung der Teilstrahlen (116) mittels der Fokussieroptik (118) Fokuselemente (120) mit unterschiedlichen Polarisationszuständen ausgebildet werden, und wobei insbesondere Fokuselemente (120) mit unterschiedlichen Polarisationszuständen zueinander benachbart angeordnet werden.

12. Verfahren nach einem der vorangehenden Ansprüche, **dadurch gekennzeichnet, dass** durch Beaufschlagung des Materials (102) des Werkstücks (104) mit den Fokuselementen (120) in dem Material (102) Materialmodifikationen (138) ausgebildet werden, welche mit einer Rissbildung des Materials (102) assoziiert sind, und/oder dass durch Beaufschlagung eines Materials (102) des Werkstücks (104) mit den Fokuselementen (120) in dem Material Typ-III-Materialmodifikationen (138) ausgebildet werden.

13. Verfahren nach einem der vorangehenden Ansprüche, **dadurch gekennzeichnet, dass** durch Beaufschlagung des Materials (102) des Werkstücks (104) mit den Fokuselementen (120) in dem Material (102) Materialmodifikationen (138) ausgebildet werden, welche mit einer Änderung eines Brechungsindex des Materials (102) assoziiert sind, und/oder dass durch Beaufschlagung eines Materials (102) des Werkstücks (104) mit den Fokuselementen (120) in dem Material Typ-I-Materialmodifikationen (138) und/oder Typ-II-Materialmodifikationen (138) ausgebildet werden.

14. Vorrichtung zur Laserbearbeitung eines Werkstücks (104), welches ein für die Laserbearbeitung transparentes Material (102) aufweist, umfassend ein Strahlteilungselement (106) zur Aufteilung eines in das Strahlteilungselement (106) eingekoppelten Eingangslaserstrahls (108) in eine Mehrzahl von Teilstrahlen (116), wobei die Aufteilung des Eingangslaserstrahls (108) mittels des Strahlteilungselements (106) durch Phasenaufprägung auf einen Strahlquerschnitt (112) des Eingangslaserstrahls (108) erfolgt, und eine Fokussieroptik (118) zur Fokussierung von aus dem Strahlteilungselement (106) ausgekoppelten Teilstrahlen (116), wobei durch Fokussierung der Teilstrahlen (116) mehrere Fokuselemente (120) zur Laserbearbeitung des Werkstücks (104) ausgebildet werden, **dadurch gekennzeichnet, dass** mittels des Strahlteilungselements (106) die Phasenaufprägung derart erfolgt, dass mindestens zwei der ausgebildeten Fokuselemente (120) eine unterschiedliche Intensität (I) aufweisen.

15. Vorrichtung nach Anspruch 14, **dadurch gekennzeichnet, dass** die Aufteilung des Eingangslaserstrahls (108) mittels des Strahlteilungselements (106) durch Phasenmanipulation und insbesondere ausschließlich durch Phasenmanipulation einer Phase des Eingangslaserstrahls (108) erfolgt.

## Claims

1. A method for laser processing a workpiece (104) which has a material (102) which is transparent for laser processing, in which an input laser beam (108) is divided by means of a beam-splitting element (106) into a plurality of partial beams (116), wherein the input laser beam (108) is split by means of the beam-splitting element (106) by phase imprinting on a beam cross-section (112) of the input laser beam (108), partial beams (116) coupled out of the beam-splitting element (106) are focused by means of a focusing optics (118), a plurality of focusing elements (120) are formed by focusing the partial beams (116), and in which the material (102) of the workpiece (104) is subjected to laser processing with at least a subset of the formed focusing elements (120), **characterized in that** the phase imprinting is effected by means of the beam-splitting element (106) in such a way that at least two of the formed focusing elements (120) have a different intensity (I).

2. The method according to claim 1, **characterized in that** the intensity (I) of the focusing elements (120) is selected such that, by applying the focusing elements (120) to the material (102), similar material modifications (138) are produced in the material (102) and, in particular, similar material modifications (138) are produced in the material (102) independent of a distance (d₀) between the respective focusing elements (120) and an outer side (130, 132) of the workpiece (104) closest to the respective focusing elements (120).

3. The method according to any one of the preceding claims, **characterized in that** the intensity (I) of the focusing elements (120) is selected as a function of a distance (d₀) and/or distance range (dr) with which the respective focusing elements (130) are spaced apart from an outer side (130, 132) of the workpiece (104) and, in particular, from an outer side (130, 132) of the workpiece (104) closest to the respective focusing elements (120).

4. The method according to claim 3, **characterized in that** the intensity (I) of the focusing elements (120) is selected to increase with an increasing distance (d₀) of the respective focusing elements (120) from the nearest outer side (130, 132) of the workpiece (104).

5. The method according to any one of claims 3 or 4, **characterized in that** an average intensity (I) of the respective focusing elements (120) which are assigned to a specific distance range (dr) is selected to be increasingly greater with an increasing mean distance (drₘ) of the respective distance range (dr) to the nearest outer side (130, 132) of the workpiece.

6. The method according to any one of claims 3 to 5, **characterized in that** at least one distance range (dr) is provided, wherein the intensity (I) of the respective focusing elements which lie within this at least one distance range (dr) is at least approximately constant.

7. The method according to any one of claims 3 to 6, **characterized in that** at least one distance range (dr) is provided, wherein the intensity (I) of the respective focusing elements (120) which lie within this at least one distance range (dr) varies, and wherein, in particular, the intensity (I) of the focusing elements (120) lying in this distance range (dr) increases with an increasing distance (d) of these focusing elements (120) from the nearest outer side (130, 132) of the workpiece (104).

8. The method according to any one of the preceding claims, **characterized in that** focusing elements (120) which are different from one another are disposed along a predetermined processing line (136), and in particular **characterized in that** the focusing elements (120) which are different from one another are spaced apart along the processing line (136) and/or have such an intensity (I) that, by applying these focusing elements (120) to the material (102) of the workpiece (104), material modifications (138) are formed in the material (102) which enable the material (102) to be separated along this processing line (136).

9. The method according to claim 8, **characterized in that** an angle of incidence (α) between the processing line (136) and an outer side (130, 132) of the workpiece (104), through which the focusing elements (120) are coupled into the material (102) of the workpiece (104) for laser processing, is at least 1° and/or at most 90°.

10. The method according to any one of the preceding claims, **characterized in that** one or a plurality of the formed focusing elements (120) are disposed or are arranged at least in sections and/or at least temporarily outside a material (102) of the workpiece (104) during the laser processing of the workpiece (104).

11. The method according to any one of the preceding claims, **characterized in that** polarization beam splitting is performed by means of a polarization beam-splitting element (128) so that the partial beams (116) have one of at least two different polarization states, wherein focusing of the partial beams (116) by means of the focusing optics (118) produces focusing elements (120) with different polarization states, and wherein, in particular, focusing elements (120) with different polarization states are disposed adjoining one another.

12. The method according to any one of the preceding claims, **characterized in that**, by applying the focusing elements (120) to the material (102) of the workpiece (104), material modifications (138) are formed in the material (102), which are associated with crack formation in the material (102), and/or that type **III** material modifications (138) are formed in the material by applying the focusing elements (120) to a material (102) of the workpiece (104).

13. The method according to any one of the preceding claims, **characterized in that**, by applying the focusing elements (120) to the material (102) of the workpiece (104), material modifications (138) are formed in the material (102) which are associated with a change in the refractive index of the material (102), and/or that type I material modifications (138) and/or type II material modifications (138) are formed in the material by applying the focusing elements (120) to a material (102) of the workpiece (104).

14. An apparatus for laser processing a workpiece (104) which has a material (102) that is transparent to laser processing, comprising a beam-splitting element (106) for splitting an input laser beam (108) coupled into the beam-splitting element (106) into a plurality of partial beams (116), wherein the input laser beam (108) is split by means of the beam-splitting element (106) by phase imprinting on a beam cross-section (112) of the input laser beam (108), and a focusing optics (118) for focusing partial beams (116) coupled out of the beam-splitting element (106), wherein, by focusing the partial beams (116), a plurality of focusing elements (120) are formed for laser processing of the workpiece (104), **characterized in that** the phase imprinting is effected by means of the beam-splitting element (106) in such a way that at least two of the formed focusing elements (120) have a different intensity (I).

15. The apparatus according to claim 14, **characterized in that** the splitting of the input laser beam (108) by means of the beam-splitting element (106) is effected by phase manipulation and, in particular, exclusively by phase manipulation of a phase of the input laser beam (108).

## Revendications

1. Procédé de traitement laser d'une pièce (104), laquelle comporte un matériau (102) transparent pour le traitement laser, au cours duquel un faisceau laser incident (108) est divisé, au moyen d'un élément de division de faisceau (106), en une pluralité de faisceaux partiels (116), dans lequel la division du faisceau laser incident (108) est réalisée au moyen de l'élément de division de faisceau (106), par modulation de phase sur une section transversale de faisceau (112) du faisceau laser incident (108), les faisceaux partiels (116) extraits de l'élément de division de faisceau (106) sont focalisés au moyen d'une optique de focalisation (118), plusieurs éléments focaux (120) sont formés par focalisation des faisceaux partiels (116), et au cours duquel le matériau (102) de la pièce (104) est irradié pour le traitement laser avec au moins un sous-ensemble des éléments focaux (120) formés, **caractérisé en ce que** la modulation de phase au moyen de l'élément de division de faisceau (106) est réalisée de telle sorte qu'au moins deux des éléments focaux (120) formés présentent une intensité (I) différente.

2. Procédé selon la revendication 1, **caractérisé en ce que** l'intensité (I) des éléments focaux (120) est choisie de telle sorte que, par irradiation du matériau (102) avec les éléments focaux (120), des modifications de matériau (138) de même type sont générées dans le matériau (102), et en particulier indépendamment d'une distance (d₀) des éléments focaux (120) respectifs par rapport à une surface extérieure (130, 132) la plus proche des éléments focaux (120) respectifs de la pièce (104), des modifications de matériau (138) de même type sont générées dans le matériau (102).

3. Procédé selon l'une quelconque des revendications précédentes, **caractérisé en ce que** l'intensité (I) des éléments focaux (120) est choisie en fonction d'une distance (d₀) et/ou d'une plage de distance (dr), avec laquelle les éléments focaux (130) respectifs sont espacés par rapport à une surface extérieure (130, 132) de la pièce (104), et en particulier par rapport à une surface extérieure (130, 132) de la pièce (104) la plus proche des éléments focaux (120) respectifs.

4. Procédé selon la revendication 3, **caractérisé en ce que** l'intensité (I) des éléments focaux (120) est choisie de manière croissante au fur et à mesure de l'augmentation de la distance (d₀) des éléments focaux (120) respectifs par rapport à la surface extérieure (130, 132) la plus proche de la pièce (104).

5. Procédé selon l'une quelconque des revendications 3 ou 4, **caractérisé en ce qu'**une intensité moyenne (I) des éléments focaux (120) respectifs, lesquels sont affectés à une plage de distance (dr) déterminée, est choisie de manière croissante au fur et à mesure de l'augmentation de la distance moyenne (drₘ) de la plage de distance (dr) respective par rapport à la surface extérieure (130, 132) la plus proche de la pièce.

6. Procédé selon l'une quelconque des revendications 3 à 5, **caractérisé en ce qu'**au moins une plage de distance (dr) est prévue, dans lequel l'intensité (I) des éléments focaux respectifs, lesquels se situent à l'intérieur de ladite au moins une plage de distance (dr) est au moins approximativement constante.

7. Procédé selon l'une quelconque des revendications 3 à 6, **caractérisé en ce qu'**au moins une plage de distance (dr) est prévue, dans lequel l'intensité (I) des éléments focaux (120) respectifs, lesquels se situent à l'intérieur de ladite au moins une plage de distance (dr), varie, et dans lequel en particulier, l'intensité (I) des éléments focaux (120) situés dans ladite plage de distance (dr) augmente avec la distance croissante (d) desdits éléments focaux (120) par rapport à la surface extérieure (130, 132) la plus proche de la pièce (104).

8. Procédé selon l'une quelconque des revendications précédentes, **caractérisé en ce que** des éléments focaux (120) distincts les uns des autres sont disposés le long d'une ligne de traitement (136) prédéfinie, et **caractérisé en ce que**, en particulier, les éléments focaux (120) distincts les uns des autres sont espacés de telle sorte le long de la ligne de traitement (136) et/ou présentent une telle intensité (I) que, par irradiation du matériau (102) de la pièce (104) avec lesdits éléments focaux (120), des modifications de matériau (138) sont formées dans le matériau (102), lesquelles permettent une séparation du matériau (102) le long de ladite ligne de traitement (136).

9. Procédé selon la revendication 8, **caractérisé en ce qu'**un angle d'incidence (α) entre la ligne de traitement (136) et une surface extérieure (130, 132) de la pièce (104) à travers laquelle les éléments focaux (120) sont couplés pour le traitement laser dans le matériau (102) de la pièce (104), est d'au moins 1° et/ou d'au plus 90°.

10. Procédé selon l'une quelconque des revendications précédentes, **caractérisé en ce qu'**un ou plusieurs des éléments focaux (120) formés sont disposés ou sont susceptibles d'être disposés, au moins par section et/ou au moins temporairement, en dehors d'un matériau (102) de la pièce (104) pendant le traitement laser de la pièce (104).

11. Procédé selon l'une quelconque des revendications précédentes, **caractérisé en ce qu'**une division de faisceau par polarisation est mise en œuvre au moyen d'un élément de division de faisceau par polarisation (128), de sorte que les faisceaux partiels (116) présentent l'un parmi au moins deux états de polarisation différents, dans lequel des éléments focaux (120) avec des états de polarisation différents sont formés par focalisation des faisceaux partiels (116) au moyen de l'optique de focalisation (118), et dans lequel, en particulier, des éléments focaux (120) à états de polarisation différents sont disposés adjacents les uns aux autres.

12. Procédé selon l'une quelconque des revendications précédentes, **caractérisé en ce que** l'irradiation du matériau (102) de la pièce (104) avec les éléments focaux (120) forme dans le matériau (102) des modifications de matériau (138), lesquelles sont associées à une fissuration du matériau (102), et/ou **en ce que**, par irradiation d'un matériau (102) de la pièce (104) avec les éléments focaux (120), des modifications de matériau (138) de type III sont formées dans le matériau.

13. Procédé selon l'une quelconque des revendications précédentes, **caractérisé en ce que** par l'irradiation du matériau (102) de la pièce (104) avec les éléments focaux (120) des modifications de matériau (138) sont formées dans le matériau (102), lesquelles sont associées à une variation d'un indice de réfraction du matériau (102), et/ou **en ce que**, par irradiation d'un matériau (102) de la pièce (104) avec les éléments focaux (120), des modifications de matériau (138) de type I et/ou des modifications de matériau (138) de type II sont formées dans le matériau.

14. Dispositif de traitement laser d'une pièce (104), laquelle comporte un matériau (102) transparent pour le traitement laser, comprenant un élément de division de faisceau (106) destiné à diviser un faisceau laser incident (108) couplé dans l'élément de division de faisceau (106) en une pluralité de faisceaux partiels (116), dans lequel la division du faisceau laser incident (108) est réalisée au moyen de l'élément de division de faisceau (106) par modulation de phase sur une section transversale de faisceau (112) du faisceau laser incident (108), et une optique de focalisation (118) destinée à focaliser les faisceaux partiels (116) extraits de l'élément de division de faisceau (106), dans lequel plusieurs éléments focaux (120) sont formés par focalisation des faisceaux partiels (116) pour le traitement laser de la pièce (104), **caractérisé en ce que** la modulation de phase au moyen de l'élément de division de faisceau (106) est réalisée de telle sorte qu'au moins deux des éléments focaux (120) formés présentent une intensité (I) différente.

15. Dispositif selon la revendication 14, **caractérisé en ce que** la division du faisceau laser incident (108) au moyen de l'élément de division de faisceau (106) est réalisée par manipulation de phase, et en particulier exclusivement par manipulation de phase d'une phase du faisceau laser incident (108).
